**Europäisches Patentamt**

**European Patent Office**

**Office européen des brevets**

(11) Numéro de publication: **0 190 078**
**A2**

## (12) DEMANDE DE BREVET EUROPEEN

(21) Numéro de dépôt: **86400165.6**

(22) Date de dépôt: **28.01.86**

(51) Int. Cl.⁴: **H 01 M 10/44**
**H 01 M 10/28, H 01 M 2/38**

(30) Priorité: **30.01.85 FR 8501338**

(43) Date de publication de la demande:
**06.08.86 Bulletin 86/32**

(84) Etats contractants désignés:
**BE DE FR GB IT NL SE**

(71) Demandeur: **S.E.R.E.G.I.E.**
**9&11, Avenue du 18 Juin 1940**
**F-92500 Rueil Malmaison(FR)**

(72) Inventeur: **Breting, Olivier**
**12, avenue du Dr. Flament**
**F-95240 Cormeilles en Parisis(FR)**

(72) Inventeur: **Bugnet, Bernard**
**13, Allée Guy de Maupassant**
**F-77420 Champ sur Marne(FR)**

(72) Inventeur: **Bronoel, Guy**
**13, rue Jean de la Bruyère**
**F-78000 Versailles(FR)**

(74) Mandataire: **Saint Martin, René**
**Régie Nationale des Usines Renault Direction des**
**Recherches et Développements Service 0804 8-10,**
**Avenue Emile-Zola**
**F-92109 Boulogne Billancourt Cedex(FR)**

(54) **Procédé de charge d'un générateur électrochimique à électrode négative de zinc, et générateur électrochimique pour la mise en oeuvre de ce procédé.**

(57) La présente invention se rapporte à un procédé de charge d'un générateur électrochimique réversible constitué par une pluralité de cellules électriquement en série comprenant une électrode négative de zinc et une électrode positive entre lesquelles circule un électrolyte basique contenant du zinc solubilisé, consistant à faire circuler successivement d'une cellule à l'autre l'électrolyte dans les cellules et à lui appliquer un courant de charge formant une succession d'impulsions de charge sensiblement rectangulaires et caractérisé par le fait qu'il consiste à inverser périodiquement le sens de circulation de l'électrolyte pendant la charge.

EP 0 190 078 A2

./...

FIG.3

## PROCEDE DE CHARGE D'UN GENERATEUR ELECTROCHIMIQUE A ELECTRODES NEGATIVES DE ZINC ET GENERATEUR ELECTROCHIMIQUE POUR LA MISE EN OEUVRE DU PROCEDE.

La présente invention se rapporte d'une part à un procédé de charge d'un générateur électrochimique constitué d'une pluralité de cellules électriquement en série comprenant une électrode négative de zinc et une électrode positive entre lesquelles circule successivement d'une cellule à l'autre un électrolyte basique contenant du zinc solubilisé et d'autre part ce générateur électrochimique pour la mise en oeuvre dudit procédé, l'électrolyte étant rendu turbulent auprès de l'électrode négative.

On connaît jusqu'à présent les tentatives infructueuses pour réaliser de manière répétitive un dépôt de zinc convenable sur l'électrode négative de zinc lors du cyclage des batteries réversibles à électrolyte basique employant ce métal. La batterie nickel-zinc est l'exemple le plus connu de telles batteries. Lors de la charge de ces batteries, le dépôt de zinc donne lieu en effet soit à la formation de mousses et dendrites, soit à des renflements irréguliers ce qui provoque rapidement des court-circuits entre électrodes. Jusqu'alors, ces défauts n'ont pas permis de tirer profit de la forte énergie massique des couples électrochimiques utilisant le zinc.

Pour améliorer le dépôt de zinc, on fait circuler l'électrolyte. La morphologie du dépôt de zinc est d'autant plus appropriée que la vitesse de l'électrolyte est plus grande lors du dépôt.

On a imaginé dans le brevet français 2 056 971 de charger les batteries à électrode négative de zinc par un courant de charge impulsionnel. On a proposé dans le brevet français 2 097 424 un courant de charge présentant des impulsions de décharge (anodiques) entre les impulsions de charge.

Le but de la présente invention est d'affiner la surface du dépôt de zinc et d'éviter les dépôts de zinc dentritique provoqués à la charge sur la négative, et par les courants de fuite passant par les canaux de raccordement entre cellules des générateurs pluricellulaires. Les moyens de l'invention assurent la dissolution des dépôts de zinc parasites.

Le procédé selon l'invention consiste à faire circuler l'électrolyte en série dans les cellules elles mêmes électriquement en série et à appliquer au générateur un courant de charge formant une succession d'impulsions sensiblement rectangulaires et il est caractérisé par le fait qu'il consiste à inverser périodiquement le sens de circulation de l'électrolyte pendant la charge.

Selon une caractéristique, le courant de charge comporte des impulsions de décharge de sens opposé aux impulsions de charge et de durée inférieure à deux dixièmes de la durée de l'impulsion charge et d'amplitude sensiblement égale à celle de cette dernière, le courant étant sensiblement nul entre les impulsions de charge et de décharge, cet arrêt durant de 3 à 10 fois la durée de ladite impulsion de charge.

Selon une caractéristique, les impulsions de charge ont une durée de 0,05 à 15 ms et les gradients de montée et de descente de ces impulsions sont supérieurs à 800A/ms.

Le générateur selon l'invention comporte une pluralité de cellules constituées chacune d'une électrode positive et d'une électrode négative de zinc délimitant ensemble des veines de canalisation d'électrolyte, ces cellules étant connectées et parcourues en série par l'électrolyte en circulation et il est caractérisé par le fait qu'il comporte des moyens pour inverser périodiquement le sens de circulation de l'électrolyte après regroupement des veines par moitié, à l'aide d'organes d'obturation de forte résistance électrique à l'état fermé.

Selon une caractéristique, les moyens pour inverser le sens de circulation de l'électrolyte comprennent des cavités d'admission ou d'échappement qui débouchent sur les extrémités de chaque veine et qui communiquent sous

0190078

le contrôle d'organes d'obturation avec des cavités de transfert de l'une des deux cellules adjacentes, chaque cavité de transfert communiquant avec une cavité d'admission ou d'échappement de l'autre cellule adjacente.

Les caractéristiques et avantages de l'invention ressortiront mieux de la description qui va suivre, donnée uniquement à titre d'exemple, en référence aux dessins annexés dans lesquels :

- la figure 1 est un graphique donnant le courant de charge I du générateur en fonction du temps T ;

- la figure 2 est une vue d'ensemble d'un générateur pluricellulaire selon l'invention ;

- la figure 3 est une coupe verticale en coupe partielle d'une forme de réalisation d'un générateur pluricellulaire de la figure 2 ;

- la figure 4 est une coupe horizontale selon IV-IV de la figure 3 ;

- la figure 5 est une coupe horizontale selon V-V de la figure 3 ;

- la figure 6 est une coupe verticale schématique d'une variante du générateur selon l'invention.

- la figure 7 représente une coupe verticale schématique d'un mode de réalisation avec électrode à air, du générateur de l'invention.

Le procédé de charge selon l'invention, décrit ci-après, s'applique à un générateur électrochimique constitué d'une pluralité de cellules comprenant une électrode négative de zinc et une électrode positive entre lesquelles circule une électrolyte basique contenant du zinc solubilisé.

Le procédé de charge consiste à appliquer aux bornes du générateur le courant de charge impulsionnel particulier. Pendant la charge, l'électrolyte circule de façon telle que le mouvement soit turbulent sur l'électrode négative où le zinc se dépose.

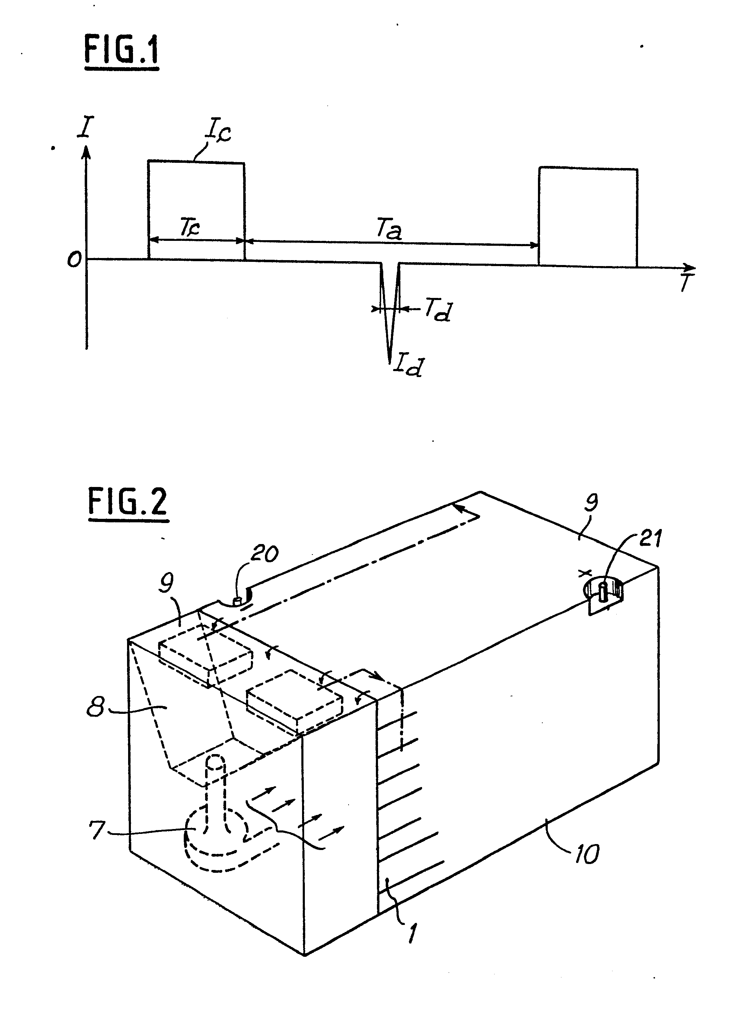

Si l'on se réfère à la figure 1, le courant de charge se caractérise par une succession d'impulsions de charge $I_c$ telles que deux impulsions successives soient séparées par un intervalle de temps $T_a$. La durée $T_c$ d'une impulsion de charge est comprise entre 0,05 et 15 m.sec (de préférence 2,5 m.sec). La surface projetée du collecteur négatif est soumise à une charge de 6 à 15A/dm$^2$ de préférence 8 à 12 A/dm$^2$. Les gradients de montée et descente en courant de ces impulsions sont supérieurs à 800A/ms.

L'intervalle du temps $T_a$ entre deux impulsions de charge est au moins égal à 3 fois la durée $T_c$ d'une impulsion de charge.

Le courant de charge comporte entre les impulsions de charge de brèves impulsions de décharge $I_d$ (impulsions anodiques) qui ont une amplitude sensiblement égale à celle des impulsions de charge. Chaque impulsion anodique $I_d$ a une durée $T_d$ de 0,05 à 0,2 fois le temps $T_c$ de l'impulsion de charge $I_c$ afin de garder un rendement de charge raisonnable.

Les impulsions de décharge $I_d$ sont séparées par au moins une impulsion de charge.

Une caractéristique du procédé consiste à inverser périodiquement le sens de circulation de l'électrolyte. Cette inversion intervient toutes les 3 à 60 minutes.

En se référant aux dessins, le générateur selon l'invention comporte un empilement de cadres 1 en matière plastique montés entre un socle 10 et un couvercle 9. Le socle 10 est destiné à permettre l'assise du générateur sur tout support ainsi que la desserte des différentes veines de guidage de l'électrolyte. Le couvercle 9 sert de protection et peut contenir les bornages 20 et 21 ainsi que les retours d'électrolyte et des composants annexes dont il sera fait mention ultérieurement.

Les cadres 1 sont réalisés de préférence en matière plastique et servent à loger les composants des cellules élémentaires.

Chaque cellule élémentaire comporte une électrode positive 2 (qui peut être une électrode de nickel, ou une électrode réversible à air, ou toute autre électrode convenable). A titre indicatif, cette électrode peut être constituée par un feutre de nickel renfermant de la matière active.

Cette électrode positive 2 est associée à une plaque bipolaire 3 appelée collecteur réalisée en matériau conducteur. Cette plaque 3 assure la mise en série des différentes cellules et porte le dépôt de zinc conducteur qui est formé pendant la charge. Elle est rendue solidaire de l'électrode 2 attenante par un système de fixation approprié.

Chaque électrode positive 2 est séparée d'un collecteur bipolaire 3 par un espace de manière à définir un canal dans lequel circule l'électrolyte, selon des veines 41 délimitées par des barrettes 6 espaçant aussi les électrodes et collecteurs.

Dans la forme de réalisation décrite et représentée, les collecteurs 3 sont plats et horizontaux. Les cadres qui reçoivent les électrodes 2 et 3 présentent à leurs extrémités des conduits de raccordement 22 avec les veines 41. Les veines 41 sont raccordées d'une cellule à l'autre par des cavités 12, 13, 14, 15 regroupant les conduits 22, de façon alternée d'une cellule à l'autre de sorte que le flux d'électrolyte commun à un générateur pluricellulaire a, dans de dernier, un cheminement en zig-zag sous l'action d'une pompe 7.

L'électrolyte basique est à base de potasse, 7 à 9 fois normale (de préférence 8 fois normale) et contient 2 à 3 % de silicates alcalins et éventuellement des additifs connus comme dépassivants ou/et inhibiteurs de corrosion. Le zinc à l'état oxydé est entièrement solubilisé.

L'électrolyte circule dans les veines 41 pendant la charge et la décharge. Un réservoir tampon 8 permet l'alimentation de la pompe 7 de circulation d'électrolyte. Il peut avantageusement recevoir la part de l'électrolyte chassée du générateur au moment de la surcharge qui termine la charge, par la création du gaz qui en découle, hydrogène à la négative, oxygène à la positive. On notera que le circuit électrolytique existant entre sortie et entrée de la batterie, circuit comportant notamment le réservoir et la ou les pompes, doit présenter une résistance telle que, sous la tension totale de la batterie, le courant de fuite soit réduit à moins de 1 % du courant nominal déjà défini.

La vitesse moyenne de circulation de l'électrolyte peut atteindre 0,1 à 0,5 m/s. L'épaisseur du maillage 5 posé sur la positive et générateur de turbulences peut s'échelonner entre 0,3 et 2 mm, et est de préférence de l'ordre de 1 mm, les mailles ont des dimensions de 3 à 10mm, les veines ayant une épaisseur allant de 2 à 4 mm.

Pendant la charge du générateur, le zinc dissous dans l'électrolyte se dépose sur les collecteurs 3.

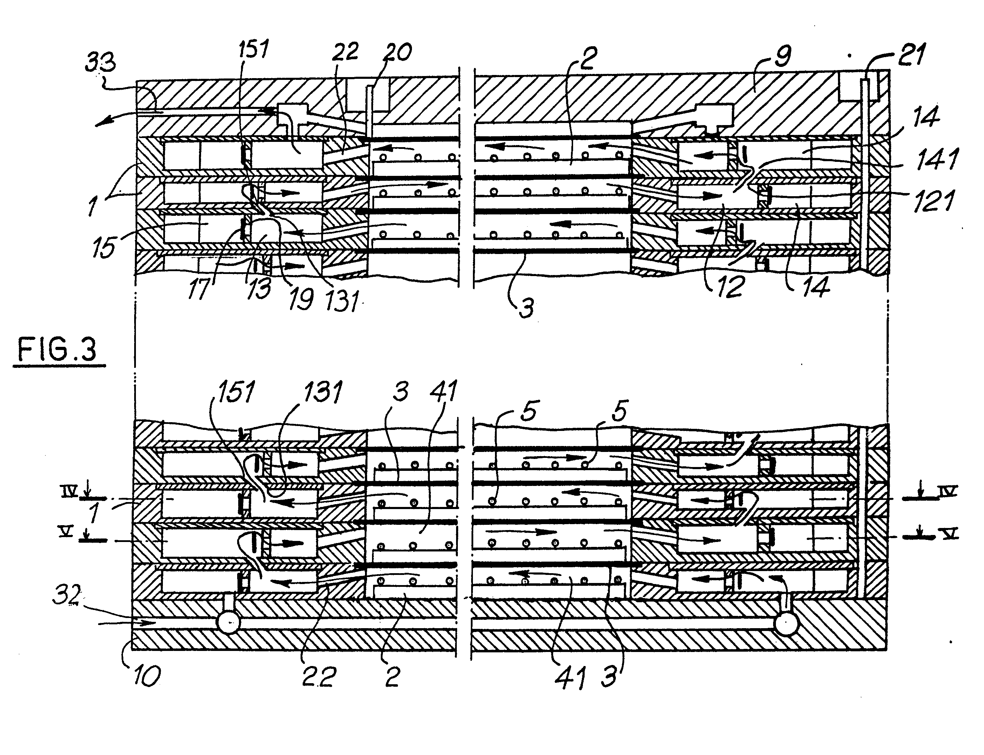

Si l'on se réfère aux figures 2 à 5, le générateur comporte des barrettes verticales 6 qui cloisonnent le canal en plusieurs veines 41. Les collecteurs 3 et les électrodes positives 2 sont tenus par les cadres 1.

Chaque collecteur 3 est réalisé par une tole d'acier ayant une épaisseur de 0,05 à 0,4 mm présentant d'un côté une face nickelée plaquée contre l'électrode positive et de l'autre côté une face cadmiée sur laquelle s'effectue le dépôt de zinc.

Chaque cellule comporte un réseau maillé ou treillis 5 de fils en matériau isolant. Il est disposé en surface contre l'électrode positive 2. Il fait face à un collecteur 3 accolé à une électrode positive, en étant séparé de ce collecteur par les canaux 4. A titre indicatif, un maillage efficace comporte des brins de 0,3 à 2 mm, les mailles mesurant de 3 à 10 mm. La fonction de ce maillage est de générer les turbulences près de l'électrode négative.

De préférence, chaque collecteur 3 est monté sous l'électrode positive 2 à laquelle il est relié.

Chaque veine 41 débouche à ses extrémités dans deux groupes de deux cavités 12 et 13. Chaque cavité 12 ou 13 communique avec une cavité de transfert 14 ou 15, le passage de l'électrolyte de l'une à l'autre des cavités étant contrôlé par une vanne comprenant un clapet ou soupape 16 et 17.

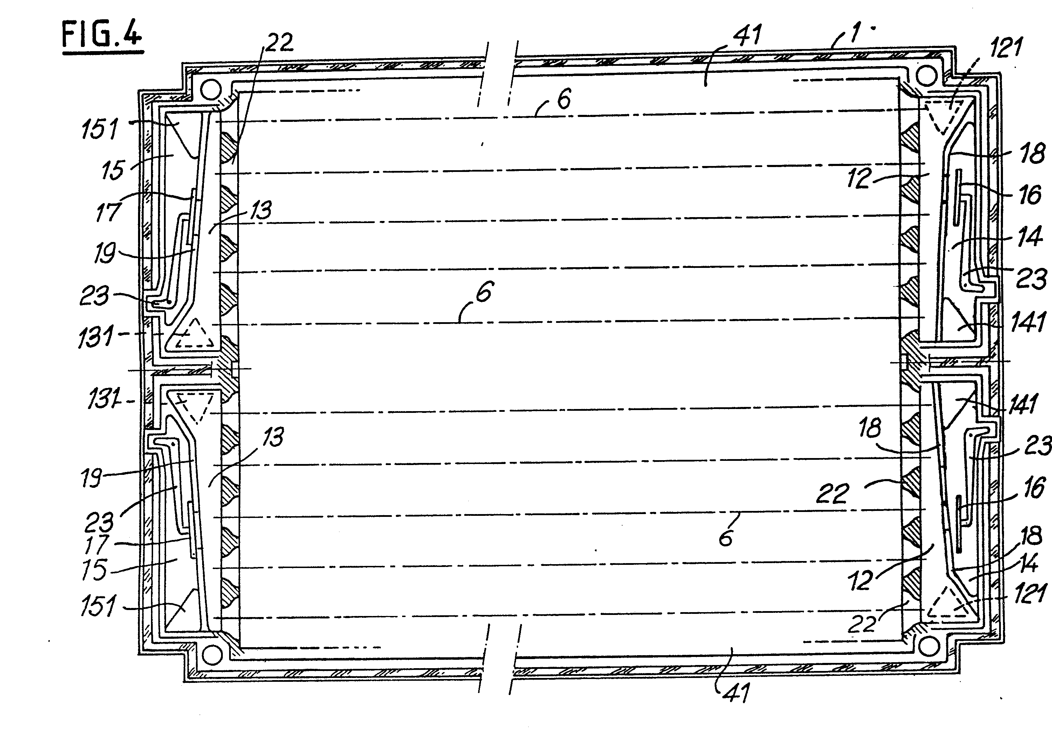

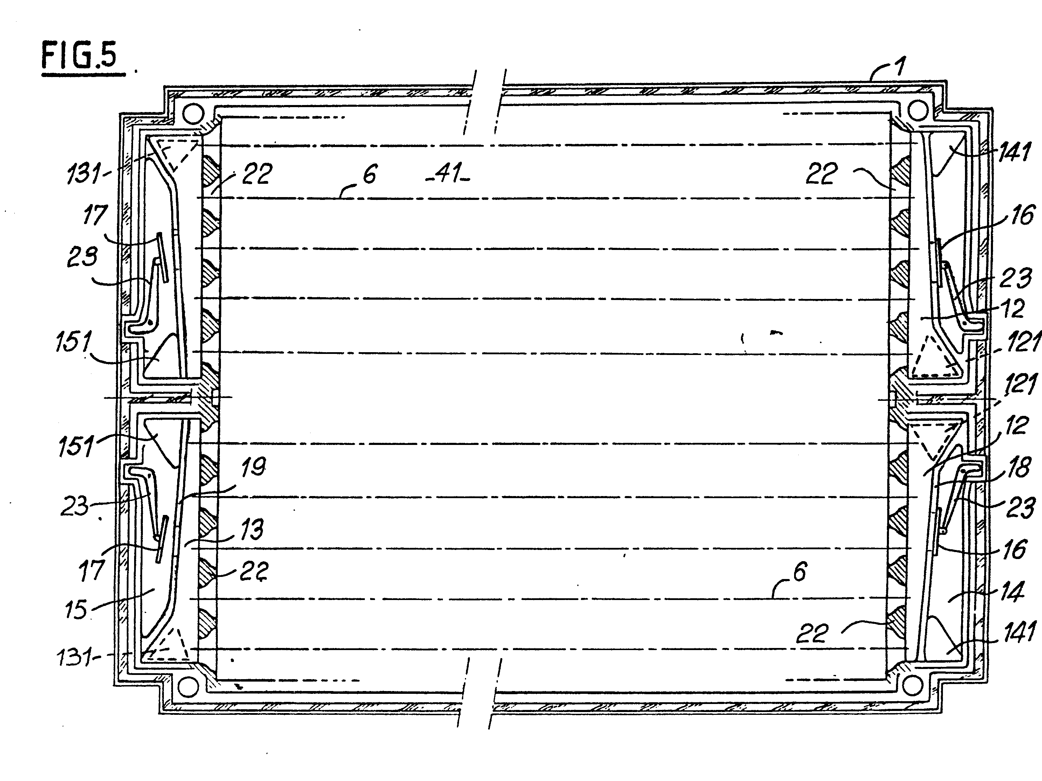

Les cavités 12, 13, 14, 15 sont logées dans les cadres 1. Elles sont séparées par des cloisons 18 ou 19 formant les sièges de soupapes et disposées en diagonales. Chaque cavité 12 ou 13 communique par l'intermédiaire d'un orifice 121 ou 131 avec la cavité de transfert de la cellule supérieure (figure 4). Chaque cavité de transfert 14 ou 15 communique par l'intermédiaire d'un orifice 141 ou 151 avec la cavité d'admission ou d'échappement de la cellule inférieure (figures 4 et 5).

L'électrolyte venant de la pompe entre dans la cellule inférieure par le canal 31. Il sort de la cellule supérieure par le canal 32 pour aller vers le réservoir.

Les cavités 12 et 13 opposées diagonalement sur le générateur sont telles que le canal 121 de l'un recouvre par rotation de 180° le canal 151 proche de l'autre. Ainsi deux cadres tournés de 180° et superposés assurent la continuité de la circulation d'électrolyte. La forme diagonale des cloisons 18 et 19 jointe à la disposition latérale des canalisations de liaison 121, 131, 141 et 151 permet seul e cette coincidence.

De même la circulation d'un sens résulte par exemple d'un clapet 16 ouvert et 17 fermé, et inversement pour les cellules contiguës.

L'inversion de toutes les dispositions de clapets inverse le sens de circulation.

On voit en figures 4 et 5 la commande très schématique des clapets par des leviers 23 commandés eux même par des vis intérieures au cadre 2 et non représentées .

Ainsi lorsque l'électrolyte venant d'une cellule inférieure arrive par l'orifice 141 dans la cavité 14 servant à l'admission, le clapet 16 est ouvert. L'électrolyte est collecté par la cavité 12 servant à l'échappement. Le clapet 16 étant ouvert, l'électrolyte passe dans la cavité 15 par l'orifice 151 et va vers la cavité d'admission 13 vers les veines 41 de la cellule à travers les tuyères 22. Pendant cette alternance la communication entre la cavité 13 et la cavité 15 de la cellule supérieure est fermé par le clapet 17 de ladite cellule.

La commande de l'inversion de l'ouverture et de la fermeture des soupapes 16 et 17 inverse la circulation de l'électrolyte. La cavité 13 sert à l'admission et la cavité 12 sert à l'échappement.

Les cavités 12 et 14 sont séparées par une cloison 18 s'étendant en diagonale et les cavités 13 et 15 sont séparées par une cloison 19 s'étendant en diagonale. Les cloisons 18 et 19 d'une même cellule sont diagonalement opposées. Les cloisons 18 ou 19 situées d'un même côté et appartenant à deux cellules adjacentes superposées sont croisées de manière que chaque cavité d'admission ou d'échappement communique avec une cavité de transfert de la cellule adjacente.

Chaque cadre 1 contient quatre cavités d'admission ou d'échappement 12 et 13 et quatre cavités de transfert 14 et 15.

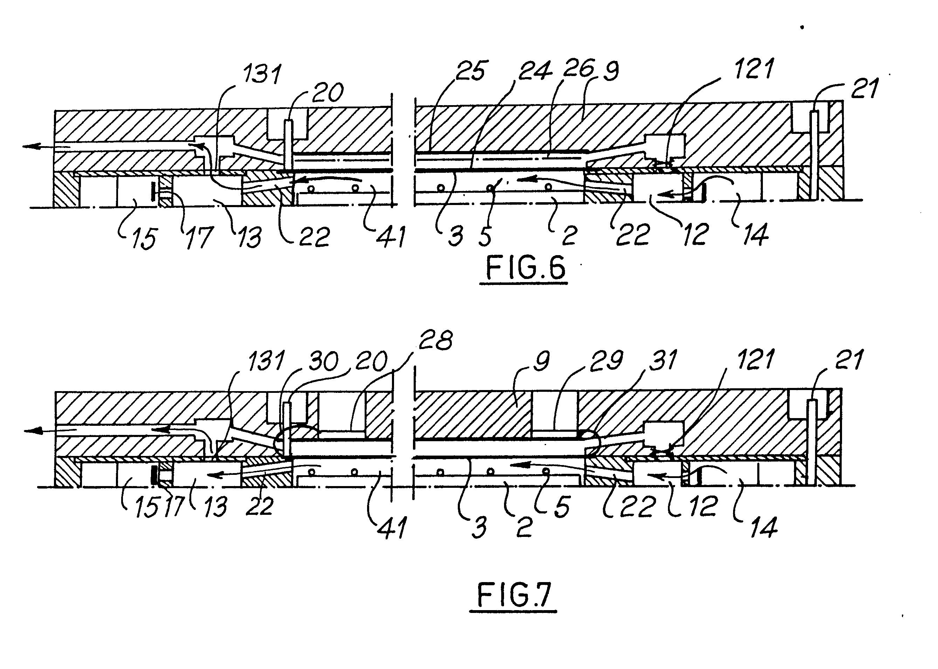

Dans le mode de réalisation de la figure 6, le générateur comporte une électrode positive complémentaire 24 qui est associée à la dernière négative 3. Elle est extérieure au circuit électrique de la batterie principale et est chargée par un moyen extérieur à celui assurant la charge principale du générateur.

Pour ce faire, cette électrode 24 est associée à une contre électrode 25 confinée dans une solution d'électrolyte sans zinc par une membrane semi perméable 26 étanche aux ions à base de zinc.

Du fait du risque de défaillance de la paroi semi perméable qui conduirait à un dépôt de zinc parasite sur 25, l'électrode positive complémentaire peut être remplacée par deux électrodes à air 28 et 29 situées près des extrémités de la dernière négative et reliées électriquement à cette dernière par des conducteurs 30 et 31, la capacité de ces électrodes étant telle qu'elles dissolvent les dépôts parasites latéraux sur 3 dûs aux courants de charge venant des positives de tension supérieure à travers les canaux 22 (figure 7) dans le canal 4.

Le fonctionnement du générateur va maintenant être décrit.

L'alternance du sens de circulation de l'électrolyte conduit à éliminer régulièrement les dépôts marginaux du zinc naissant de la charge d'une négative par les positives de tension supérieure à travers les canaux de raccordement d'une cellule à l'autre, les courants correspondants étant dits de fuite.

Il est clair que sur une cellule élémentaire, un canal de liaison 22 ouvert vers les cellules de tensions supérieures à travers les cavités 12, 13, 14, 15 et l'un des clapets 16 ou 17, permet un courant de charge parasite dû aux dites cellules, lequel se traduit par un dépôt parasite dentritique latéral à l'électrode 3.

L'autre extrémité de 3 est alors reliée électrochimiquement à la positive 2 associée à 3 provoquant un courant de court circuit car 2 et 3 sont en court circuit franc dans un même électrolyte.

En résulte une dissolution latérale du zinc proportionnée à ce courant et au temps.

L'alternance du sens d'écoulement de l'électrolyte fait que les dépôts de zinc par les courants de fuite en charge sont compensés par les courants permanents de court circuit.

Aussi une bonne proportion des temps de charge et de repos pendant, cette charge, et en comptant l'effet de la resistance électrochimique des canaux de liaison de l'électrolyte d'une cellule à l'autre, permet d'éliminer tous les dépôts parasites liés aux courants de fuite pendant la charge.

- 10 -

0190078

La seule négative 3 de tension origine, qui n'a pas de positive 2 associée demande un remède complémentaire. Celui-ci consiste à nantir cette négative extrème d'une positive d'appoint 24 (figure 6) chargée indépendamment du générateur lui-même. Elle agit comme les autres positives, au prix de la commutation du sens de l'électrolyte. La charge de cette positive impose une contre électrode 25 qui risquerait de prélever du zinc utile. Aussi doit elle être protégée par une paroi semi perméable 26 bloquant les ions zinc.

Cette paroi semi perméable 26 risquant la défaillance dangereuse on peut la remplacer par deux électrodes à air 28 et 29 (figure 7) reliées électriquement à 3 par les fils 30 et 31 et situées elles-mêmes près des extrémités de la négative extrème 3.

Il va sans dire que ces compensations ne peuvent exister que si les canaux obturés offrent une résistance électrique suffisante, ce que font seules les obturations à soupape (> 150 $\Omega$).

Naturellement, l'invention n'est pas limitée aux modes de réalisation décrits et représentés et elle est susceptible de nombreuses variantes accessibles à l'homme de l'art sans que l'on s'écarte de l'esprit de l'invention.

L'orientation des collecteurs dans l'espace est indifférente.

Enfin, les moyens décrits dans l'invention peuvent être employés pour d'autres types de batteries.

L'alternance du sens de circulation de l'électrolyte pourra être utilisée autant pendant la décharge que pendant la charge.

REVENDICATIONS

1. Procédé de charge d'un générateur électrochimique réversible constitué par une pluralité de cellules électriquement en série comprenant une électrode négative de zinc et une électrode positive entre lesquelles circule un électrolyte basique contenant du zinc solubilisé, consistant à faire circuler successivement d'une cellule à l'autre l'électrolyte dans les cellules et à lui appliquer un courant de charge formant une succession d'impulsions de charge sensiblement rectangulaires, caractérisé par le fait qu'il consiste à inverser périodiquement le sens de circulation de l'électrolyte pendant la charge.

2. Procédé de charge selon la revendication 1, caractérisé par le fait que le courant de charge comporte des impulsions de décharge de sens opposé aux impulsions de charge intercalées entre ces dernieres et de durée inférieure à deux dixièmes de la durée de ces impulsions de charge et d'amplitude sensiblement égale à celle des impulsions de charge, le courant étant sensiblement nul entre les impulsions de charge et de décharge.

3. Procédé selon la revendication 1 ou 2, caractérisé par le fait que les impulsions de charge ont une durée de 0,05 à 15ms et que les gradients de montée et de descente de ces impulsions sont supérieurs à 800A/ms.

4. Procédé selon la revendication 1 ou 2, caractérisé par le fait que le courant de charge comporte des impulsions de décharge séparées par au moins deux impulsions de charge.

5. Générateur électrochimique pour la mise en oeuvre du procédé, comportant une pluralité de cellules constituées chacune d'une électrode positive (2) et d'une électrode (3) négative de zinc délimitant ensemble des veines (41) de canalisation d'électrolyte, ces cellules étant connectées et parcourues en série par l'électrolyte en circulation, caractérisé par le fait qu'il comporte des moyens (12 à 17) pour inverser périodiquement le

- 12 -

0190078

sens de circulation de l'électrolyte, après regroupement des veines par moitié, à l'aide d'organes d'obturation (16, 17) de forte résistance électrique à l'état fermé.

6. Générateur selon la revendication 5, caractérisé par le fait que les moyens pour inverser le sens de circulation de l'électrolyte comprennent des cavités d'admission ou d'échappement (12, 13) qui débouchent sur les extrémités de chaque veine (41) et qui communiquent sous le contrôle d'organes d'obturation (16, 17) avec des cavités de transfert (14, 15) chaque cavité d'admission ou d'échappement (12 ou 13) communiquant avec une cavité de transfert (14 ou 15) de l'une des deux cellules adjacentes, chaque cavité de transfert (14 ou 15) communiquant avec une cavité d'admission ou d'échappement (12 ou 13) de l'autre cellule adjacente.

7. Générateur selon la revendication 5 ou 6, caractérisé par le fait qu'il comporte une électrode positive complémentaire (24) qui est associée à une contre électrode (25) avec une membrane semi-perméable (26).

8. Générateur selon la revendication 5 ou 6, caractérisé par le fait qu'il comporte deux électrodes à air reliées électriquement à la dernière négative.

9. Générateur selon la revendication 5 ou 6, caractérisé en ce que la positive comprend en surface un réseau maillé de fils isolants de diamètre de brin 0,3 à 2 mm et de mailles de 3 à 10 mm, les veines ayant une épaisseur allant de 2 à 4 mm.

## FIG.1

## FIG.2

FIG.3

FIG.4

**FIG.5**

0190078

FIG.6

FIG.7